# EUROPEAN PATENT APPLICATION

(11) **EP 4 603 889 A1**
(43) Date of publication of application: **20.08.2025**
(21) Application number: 24157996.0
(22) Date of filing: 16.02.2024
(51) Int. Cl.: G02B 21/06, G02B 21/12, G02B 21/36, G02B 27/58

(54) **A LIGHT SOURCE FOR A FOURIER PTYCHOGRAPHY MICROSCOPY SYSTEM**

(71) Applicant: CellaVision AB, 223 62 Lund (SE)
(72) Inventor: ALMERS, Martin, 226 51 Lund (SE); Hedlund, Sven, 226 57 Lund (SE)
(74) Representative: AWA Sweden AB

(57) **Abstract**

The present inventive concept relates to a light source (10) for a Fourier ptychography microscopy system (20) and to a Fourier ptychography microscopy system (20). The light source (10) being configured to illuminate a sample (232) from a plurality of directions, the light source comprising: a plurality of light-emitting elements (100), each light-emitting element being configured to illuminate the sample (232) from one direction of the plurality of directions; and a light-shielding member (110) provided with a plurality of apertures (112); and wherein the light-shielding member (110) and the plurality of light-emitting elements (100) are arrangeable in a mounted state in which each light-emitting element of the plurality of light-emitting elements (100) is associated with one aperture of the plurality of apertures (112) for enabling said light-emitting element to illuminate the sample (232) through said one aperture.

## Description

### Technical field

The present inventive concept relates to a light source for a Fourier ptychography microscopy system and to a Fourier ptychography microscope system.

### Background of the invention

Fourier ptychography microscopy (FPM) is a technique that uses computational methods to enhance resolution and field of view of optical microscopes. The technique is based on the principle of Fourier optics, which relates a spatial distribution of light in an object plane to an angular distribution of light in a Fourier plane. Illuminating a specimen from different angles of illumination, it is possible to access different regions of the Fourier plane which contain different spatial frequencies of that specimen. By collecting enough images with sufficient angular diversity, a large portion of the Fourier plane can be reconstructed, and an inverse Fourier transform of that reconstructed Fourier plane can result in a high-resolution object image depicting the specimen. Typically, a series of low-resolution images of a specimen is captured under different illumination conditions (i.e., from different angles) and the captured low-resolution images are combined using an algorithm capable of recovering phase and amplitude of the captured light. This, in turn, allows for construction of the high-resolution image (i.e., having a higher resolution than the low-resolution images) depicting the specimen.

An important component for FPM is the light source which influences the quality and contrast of the constructed images. A common type of light source used in FPM is an array of light-emitting elements, and the individual light-emitting elements of the array are arranged to illuminate the specimen at different angles. Hence, the array which can be controlled and adjusted to vary the angle of incidence of the illumination on the specimen. However, it may be problematic for the construction algorithm if the specimen is unintentionally illuminated at several angles simultaneously. For instance, this can happen due to incorrectly arranged light-emitting elements. Further, in case the light-emitting elements do not emit collimated light, a portion of the light emitted by a light-emitting element can reach the specimen at other angles than intended, either directly or after being reflected. For instance, this can be the case for light-emitting diodes (LEDs) which typically emit light having a Lambertian distribution. Thus, there exists a need for improvements within the art.

### Summary of the invention

In view of the above, it is an object of the present inventive concept to provide a light source for a Fourier ptychography microscopy system.

A further object is to, at least partly, mitigate, alleviate or eliminate one or more of the above-identified deficiencies in the art and disadvantages singly or in any combination and solve at least the above-mentioned problem.

According to a first aspect a light source for a Fourier ptychography microscopy system is provided. The light source is configured to illuminate a sample from a plurality of directions. The light source comprises: a plurality of light-emitting elements, each light-emitting element being configured to illuminate the sample from one direction of the plurality of directions; and a light-shielding member provided with a plurality of apertures. The light-shielding member and the plurality of light-emitting elements are arrangeable in a mounted state in which each light-emitting element of the plurality of light-emitting elements is associated with one aperture of the plurality of apertures for enabling said light-emitting element to illuminate the sample through said one aperture.

Within the context of this disclosure, the wording "aperture" should be understood an opening which allows light so pass through. In particular, the aperture should be large enough to avoid a high degree of diffraction effects. For instance, a width of the aperture may be 1 mm or larger. Preferably, the width of the aperture may be 2 mm or 3 mm.

By means of the present inventive concept an improved definition of a position and/or a direction from which the sample is illuminated is allowed. In particular, since the sample is illuminated via the apertures of the light-shielding member, a probability that light from unintended positions/directions reaches the sample is reduced. For instance, reflections from parts of the light source (e.g., surface elements on which the plurality of light-emitting elements may be arranged) can be reduced. Further, in case the light-emitting elements are configured to emit uncollimated light, an angular distribution of the emitted uncollimated light reaching the sample may be reduced by the aperture with which the light-emitting element is associated.

An aperture of the plurality of apertures of the light-shielding member in the mounted state may be arranged in close proximity to a light-emitting element of the plurality of light-emitting elements. By arranging the light-emitting element and its associated aperture in close proximity, an even better definition of the position and/or the direction from which the sample is illuminated may be allowed. Hence, a probability of light reaching the sample from unintended positions/directions may be even further reduced.

An aperture of the plurality of apertures of the light-shielding member may be defined by a tubular channel. By defining an aperture by a tubular channel, a range of angles that light may be allowed to propagate through the aperture may be reduced. This, in particular, in case the inner surface of the tubular channel comprises a material configured to at least partly absorb light emitted by the light-emitting elements.

A length of the tubular channel may be at least 2 mm, preferably at least 5 mm. As is understood from this disclosure, the longer the tubular channel, the smaller the range of angles of light propagating through the channel may be. It has been found that a length of at least 2 mm may be beneficial to this end.

A light-emitting element of the plurality of light-emitting elements may be at least partly arranged in an associated tubular channel. Accordingly, a majority of, or even all, light emitted by such light-emitting element may be allowed to enter the tubular channel. This, in turn, may allow for even further reduction of the probability of light reaching the sample from unintended positions/directions. For instance, reflections of light emitted from the light-emitting element and reaching the sample may be reduced (or even prohibited). This, in particular, in case the inner surface of the tubular channel comprises a material configured to at least partly absorb light emitted by the light-emitting elements.

The light source may further comprise a plurality of partition wall members. At least one partition wall member may be arranged in between two neighboring light-emitting elements. Thus, the at least one partition wall member may be arranged to prohibit light from a first of the two neighboring light-emitting elements to reach a second of the two neighboring light-emitting elements. This, in turn, may light emitted from the first (or the second) light-emitting element of the two neighboring light-emitting elements to predominantly illuminate the sample via its associated aperture. Put differently, a probability of light reaching the sample from unintended positions/directions may be even further reduced. This, in particular, in case the plurality of partition wall members comprises a material configured to at least partly absorb light emitted by the light-emitting elements.

The light-shielding member may be formed as a single-piece structure. Accordingly, an easier handling of the light-shielding member may be allowed as compared to a light-shielding member formed as several separate structures.

The single-piece structure may be 3D printed. Accordingly, a more complex configuration of the light-shielding member may be allowed. For instance, certain complex shapes may be difficult, or even impossible, to form via molding.

The light source may further comprise a support member having a curved interior surface. The plurality of light-emitting elements may be arranged on the curved interior surface of the support member. Accordingly, arranging the plurality of light-emitting elements to illuminate the sample from the plurality of directions may thereby be simplified. For instance, the plurality of light-emitting elements may be distributed over the curved interior surface and configured to predominantly emit light along a direction parallel to a normal of the curved interior surface. Further, the curved interior surface may allow a more similar distance between the sample and each light-emitting element of the plurality of light-emitting elements.

The curved interior surface of the support member may be formed by a plurality of surface elements. Accordingly, a modular support member may thereby be allowed. This, in turn, may allow for an easier/less complex repair procedure of the support member in case it is damaged. For instance, in case a light-emitting element arranged on a surface element is not functioning properly, that surface element may be replaced by a new surface element on which a light-emitting element is arranged.

The support member and the light-shielding member may be releasably attachable. Accordingly, a modular light source may thereby be allowed. For instance, it may be easier to replace the light-shielding member in case it is damaged. Further, in case the support member is damaged, it may be replaced without needing to replace the light-shielding member. Furthermore, a less complex manufacturing process of the light source may be allowed, since the support member and the light-shielding member may be formed in separate manufacturing processes.

In the mounted state, the plurality of light-emitting elements may be attached to the light-shielding member. Accordingly, the light source may thereby comprise fewer parts. For instance, a support member may not be needed.

A light-emitting element of the plurality of light-emitting elements may be a light-emitting diode configured to emit polychromatic light. Accordingly, multispectral imaging may be allowed, since polychromatic light comprises a larger range of wavelengths than light-emitting diodes configured to emit narrow-spectrum light. Within the context of this disclosure, the wording "polychromatic light" should be understood as light having a spectrum comprising a relatively broad range of wavelengths. A spectrum of polychromatic light may be continuous. A spectrum of polychromatic light may be at least partly continuous. A spectrum of polychromatic light may comprise a relatively broad spectrum. A spectrum of polychromatic light may be discontinuous. A spectrum of polychromatic light may comprise a combination of a relatively broad spectrum and a relatively narrow spectrum. Examples of polychromatic light may be white light, quasi-white light, and/or pseudo-white light. Polychromatic light may, e.g., resemble sunlight. Polychromatic light may have a wavelength in the visible light spectrum. The spectrum of polychromatic light may comprise a majority of the visible light spectrum, as opposed to light having a narrow spectrum (i.e., narrow-spectrum light). Polychromatic light may have a spectral width of 100 nm or more. For example, polychromatic light may have a spectral width of 200 nm or more. Polychromatic light may have a spectral width of 400 nm or less. For instance, polychromatic light may have a spectral width of 300 nm or less. Here, "spectral width" may be a range of wavelengths of the light emitted by the one or more light sources. For instance, spectral width may be a range of a majority (or all) wavelengths of light emitted by the one or more light sources. The spectral width may be a full width at half maximum (FWHM) or any other suitable measure used within the art.

Within the context of this disclosure, the wording "narrow-spectrum light" should be understood as light having a spectrum comprising a relatively narrow range of wavelengths. A spectrum of narrow-spectrum light may be continuous. A spectrum of narrow-spectrum light may be at least partly continuous. A spectrum of narrow-spectrum light may be discontinuous. Narrow-spectrum light may be monochromatic or quasi-monochromatic light. Narrow-spectrum light may appear as light having a single color. For instance, narrow-spectrum light may appear as red, green, or blue light. Narrow-spectrum light may have a wavelength in the visible light spectrum. Narrow-spectrum light may have a spectral width of 70 nm or less. For example, narrow-spectrum light may have a spectral width of 50 nm or less. As a further example, narrow-spectrum light may have a spectral width of less than 20 nm.

According to a second aspect a Fourier ptychography microscope system is provided. The Fourier ptychography microscope system comprises: an image sensor; a microscope objective configured to image a sample onto the image sensor; the light source according to the first aspect; and circuitry configured to execute: an acquisition function configured to acquire a set of digital images by being configured to: control the light source to illuminate the sample with a plurality of illumination patterns, and control the image sensor to capture a digital image for each illumination pattern of the plurality of illumination patterns, and an image processing function configured to: process the set of digital images, and output a processing result associated with the sample.

Within the context of this disclosure, the wording "illumination patterns" should be construed as different ways of illuminating the sample using the light source. Each illumination pattern may, e.g., be formed by simultaneously illuminating the sample from one or more directions of the plurality of directions, and/or by varying the number of light-emitting elements of the light source that emit light.

An illumination pattern of the plurality of illumination patterns may be formed by one or more light-emitting elements. Accordingly, the digital images of the sample may captured under different illumination conditions, whereby more information (e.g., information associated with a larger portion of the Fourier space) of the sample may be collected in the captured digital images.

At least one direction of the plurality of directions may correspond to an angle larger than a numerical aperture of the microscope objective. Thus, at least one illumination pattern of the plurality of illumination patterns may be formed by a light-emitting element configured to illuminate the sample from a direction corresponding to an angle larger than the numerical aperture of the microscope objective. Accordingly, information of the Fourier space (i.e., the Fourier space associated with the sample) corresponding to higher spatial frequencies may thereby be captured.

The image processing function may be configured to process the set of digital images by being configured to: input the set of digital images into a machine learning model trained to process digital images of samples; and receive, from the machine learning model, the processing result associated with the sample.

Within the context of this disclosure, the wording "machine learning model" should be construed as a machine learning model suitable for image processing. The machine learning model may, e.g., be a convolutional neural network.

The processing result may comprise one or more of: a digital image depicting the sample; a classification of the sample; and a detection of one or more objects within the sample.

The above-mentioned features of the first aspect, when applicable, apply to this second aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1 is a schematic illustration of a cross-sectional side view of a light source for a Fourier ptychography microscopy system.
Figure 2 is an illustration of a light-shielding member formed as a single-piece structure.
Figure 3 is a schematic illustration of a cross-sectional side view of a light source comprising a light-shielding member for which an aperture of the plurality of apertures is defined by a tubular channel.
Figure 4 illustrates a different view of the light-shielding member of Fig. 3.
Figure 5 is a schematic illustration of a cross-sectional side view of a mounted state of the light source in which a light-emitting element is at least partly arranged in an associated tubular channel.
Figure 6A is a schematic illustration of a cross-sectional side view of a light source comprising a support member.
Figure 6B is a schematic illustration of a top view of the light source of Fig. 6A.
Figure 7 is an illustration of a support member for which its curved interior surface is formed by a plurality of surface elements.
Figure 8 is a schematic illustration of a cross-sectional side view of a mounted state of the light source in which the plurality of light-emitting elements is attached to the light-shielding member.
Figure 9 is a schematic illustration of a Fourier ptychography microscope system.
Figure 10 illustrates a mounted state of the light source.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

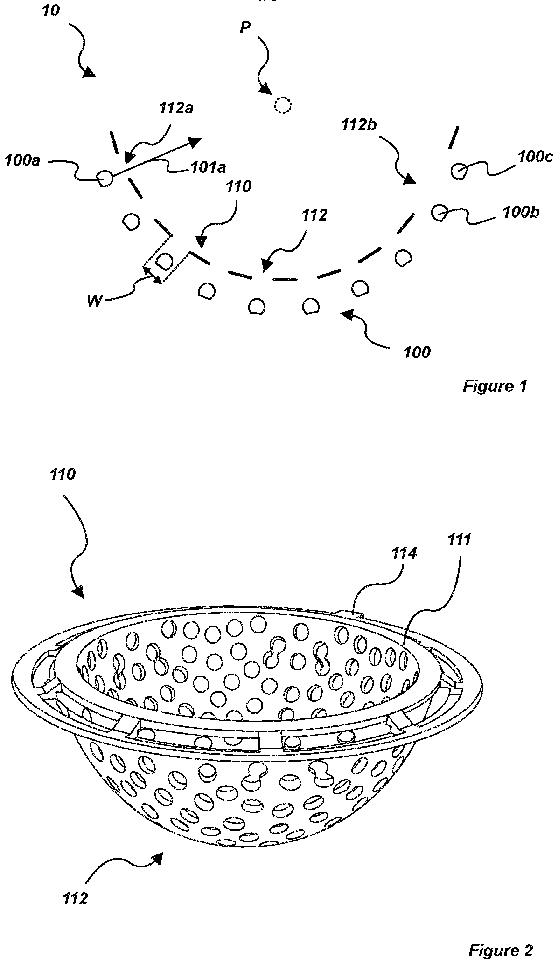

A light source 10 for a Fourier ptychography microscopy system will be described in the following with reference to Fig. 1 - Fig. 10. Figure 1 is a schematic cross-sectional illustration of the light source 10. As is illustrated in Fig. 1, the light source 10 is configured to illuminate an illumination position P from a plurality of directions. A sample may be positioned at the illumination position P. At least one direction of the plurality of directions may correspond to an angle larger than a numerical aperture of suitable microscope objectives. Suitable microscope objectives may be optical microscope objectives. Suitable microscope objectives may have a numerical aperture larger than 0.1. For instance, the numerical aperture of the microscope objective may be 0.4, 0.65, 0.80, etc. Suitable microscope objectives may have a magnification larger than 4x. For instance, the magnification of the microscope objective may be 10x, 20x, 40x, 60x, etc.

The light source 10 comprises a plurality of light-emitting elements 100, and a light-shielding member 110. The light source 10 may further comprise a communications port (not illustrated). The communications port may be configured to receive instructions from an external device (e.g., a computer, smartphone, etc.). The received instructions may be control instructions for the light source 10. For instance, the received instructions may comprise information on which light-emitting element or light-emitting elements of the plurality of light-emitting elements 100 should be activated. Put differently, the light source 10 may be controllable via the communications port.

The plurality of light-emitting elements 100 may comprise a light-emitting diode (LED). The plurality of light-emitting elements 100 may consist of LEDs. One or more light-emitting elements of the plurality of light-emitting elements 100 may be configured to emit narrow-spectrum light. One or more light-emitting elements of the plurality of light-emitting elements 100 may be configured to emit polychromatic light. A light-emitting element of the plurality of light-emitting elements 100 may be an LED configured to emit polychromatic light and/or narrow-spectrum light. The LEDs may be any type of LED, such as ordinary LED bulbs (e.g. traditional and inorganic LEDs), graphene LEDs, or LEDs typically found in displays (e.g. quantum dot LEDs (QLEDs) or organic LEDs (OLEDs)). However, other types of light-emitting elements may be used as well. The light source 10 may, for example, comprise a plurality of lasers. The light emitted from one or more lasers of the plurality of lasers may be converted to light with broader spectral width. An example of such conversion process may be referred to as supercontinuum generation. The light-emitting elements may be configured to emit incoherent light, quasi-coherent light, or coherent light. However, compared to LEDs, light emitted by a laser may form speckle patterns. It may therefore, in that aspect, be beneficial to use LEDs instead of lasers as light-emitting elements of the light source 10. In particular, in case the light-emitting element is an LED configured to emit polychromatic light, a less complex multispectral imaging may be allowed, since polychromatic light comprises a wider range of wavelengths than LEDs configured to emit narrow-spectrum light. This, in turn, allows a sample to be illuminated by light having a wider range of wavelengths if polychromatic light is used instead of narrow-spectrum light. Thus, information (e.g., information of an illuminated sample) related to that larger range of wavelength may thereby be collected. It is however to be understood that the light source 10 may comprise one or more light-emitting elements configured to emit polychromatic light and one or more light-emitting elements configured to emit narrow-spectrum light. This may allow capturing information of the sample related to both a large range of wavelengths (i.e., using the polychromatic light) and to one or more narrow ranges of wavelengths (i.e., using narrow-spectrum light of one or more colors). Each light-emitting element of the plurality of light-emitting elements 100 is configured to illuminate the sample from one direction of the plurality of directions 102. The direction in which the light-emitting element is configured to illuminate the sample may be a direction in which the light emitted by the light-emitting element has a highest intensity. Put differently, the direction may be a direction in which light emitted from the light-emitted element has highest intensity. Compared to light emitted by laser sources, an angular distribution of light emitted by an LED may be larger. For instance, an LED may be configured to emit uncollimated light. Typically, an LED may emit light having a Lambertian distribution. Such larger angular distribution can result in a larger uncertainty of which position and/or direction a light-emitting element is configured to emit light. This may, e.g., be due to the angular distribution itself and/or by reflections of light. To reduce such effects, the light source comprises the light-shielding member 110.

The light-shielding member 110 is provided with a plurality of apertures 112. The light-shielding member 110 may be made of a suitable material. Suitable materials may depend on how the light-shielding member is formed. For instance, the light-shielding member 110 may be made of a plastic, a metal, a composite material, etc. The light-shielding member 110 may further comprise a coating. The coating may be a non-reflective coating. The non-reflective coating may be configured to prohibit reflections of light emitted by the light-emitting elements. The coating may, e.g., be configured to absorb light emitted by the light-emitting elements.

As is illustrated in Fig. 1, the light-shielding member 110 and the plurality of light-emitting elements 100 are arrangeable in a mounted state. In the mounted state, each light-emitting element of the plurality of light-emitting elements 100 is associated with one aperture of the plurality of apertures 112 for enabling said light-emitting element to illuminate the illumination position P through said one aperture. This is exemplified in Fig. 1 by a first light-emitting element 100a which is configured to illuminate the illumination position P through a first aperture 112a. This is exemplified by arrow 101a in Fig. 1. Each light-emitting element of the plurality of light-emitting elements may be configured to illuminate the illumination position P through the associated aperture. In the mounted state, each aperture may be associated with more than one light-emitting element. For instance, one aperture may be associated with one, two, or three light-emitting elements. This is exemplified in Fig. 1 by a second light-emitting element 100b and a third light-emitting element 100c which are configured to illuminate the illumination position P through a second aperture 112b. Here "aperture" should be understood as an opening which allows light to pass through. In particular, the aperture should be large enough to avoid a high degree of diffraction effects. Further, the aperture should be large enough such that the aperture may avoid reducing a field of view of a microscope system which the light source may be used with. For instance, a width W of the aperture may be 1 mm or larger. Preferably, the width W of the aperture may be 2 mm or 3 mm. One or more apertures of the plurality of apertures 112 may have a circular and/or an elliptical cross section. However, it is to be understood that other cross-sectional shapes are possible, e.g., rectangular, triangular, etc. The light-shielding member 110 allow an improved definition of the position and/or the direction from which the illumination position P is illuminated. In particular, since the illumination position P is illuminated via the apertures of the light-shielding member 110, a probability that light emitted from the plurality of light-emitting elements 100 reaches the illumination position P from unintended positions/directions is reduced. For instance, reflections from parts of the light source 10 itself (and/or other parts that may be used together with the light source 10) can be reduced. Further, in case the plurality of light-emitting elements 100 is configured to emit uncollimated light (e.g., light from an LED), an angular distribution of the emitted uncollimated light reaching the sample may be reduced by the aperture with which the light-emitting element is associated.

As is further illustrated in Fig. 1, an aperture of the plurality of apertures 112 of the light-shielding member 110 in the mounted state may be arranged in close proximity to a light-emitting element of the plurality of light-emitting elements 100. In the mounted state, an entrance of the aperture may be 10 mm or less from an associated light-emitting element. Preferably, the entrance of the aperture may, in the mounted state, be 5 mm or less from an associated light-emitting element. For instance, the entrance may be 1 mm to 2 mm from the associated light-emitting element. By arranging the light-emitting element and its associated aperture in close proximity, an even better definition of the position and/or the direction from which the illumination position P is illuminated may be allowed. Hence, a probability of light reaching the illumination position P from unintended positions/directions may be even further reduced.

As illustrated in Fig. 2, the light-shielding member 110 may be formed as a single-piece structure 111. As is seen in Fig. 2, the single-piece structure 111 may extend between the plurality of apertures 112. The light-shielding member 110 may comprise a protrusion 114. The single-piece structure 111 may be 3D printed, which may allow a more complex configuration of the light-shielding member 110. For instance, certain complex shapes may be difficult, or even impossible, to form via other means (e.g., molding). This may be the case if the single-piece structure 111 exceeds a specific thickness. The specific thickness over which the single-piece structure 111 must be formed via 3D printing may depend on the width of the apertures, a number of apertures, and a shape of the single-piece structure 111.

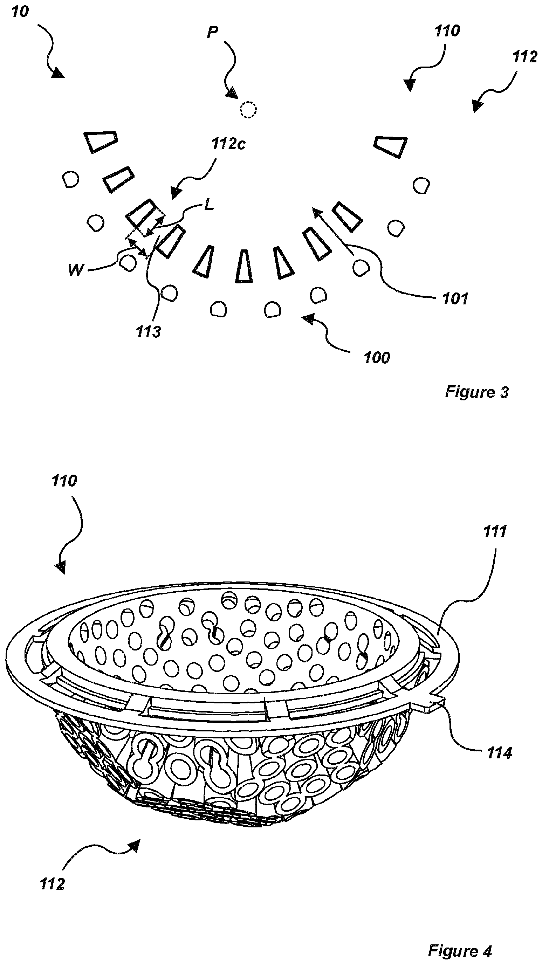

As is illustrated in Fig. 3, an aperture 112c of the plurality of apertures 112 of the light-shielding member 110 may be defined by a tubular channel 113. Figure 4 illustrates a different view of the light-shielding member 110 of Fig. 3. Similar to the light-shielding member 110 illustrated in Fig. 2, the light-shielding member 110 illustrated in Fig. 4 is formed as a single-piece structure 111. A further similarity to the light-shielding member 110 of Fig. 2, the light-shielding member 110 of Fig. 4 may comprise a protrusion 114. However, the shape of the light-shielding member 110 of Fig. 4 is complex due to its thickness and therefore may need to be made by 3D printing. The aperture 112c may be defined by an opening of the tubular channel 113. The aperture 112c may be defined by an entrance opening of the tubular channel 113. The aperture 112c may be defined by an exit opening of the tubular channel 113. A width W of the opening of the tubular channel may be smaller than its length L. However, it is to be understood that the width W of the opening of the tubular channel may be equal to or larger than its length L. A length L of the tubular channel may be at least 2 mm, preferably at least 5 mm. A longitudinal extension (i.e., the length L) of the tubular channel 113 may be substantially parallel to the direction (represented by arrow 101 in Fig 3) which the associated light source is configured to illuminate the illumination position P. The length L of the tubular channel 113 may be 2 mm or longer. The length L of the tubular channel 113 may be 5 mm or longer. For instance, the length L of the tubular channel 113 may be 1 cm. An inner surface of the tubular channel 113 may comprise a material configured to at least partly absorb light emitted by at least one light-emitting element of the plurality of light-emitting elements 100. Thus, light emitted by a light-emitting element of the plurality of light-emitting elements 100 and reaching the inner surface of the tubular channel 113 may be at least partially absorbed. Alternatively, or additionally, light emitted by the light-emitting element and reaching the inner surface of the tubular channel 113 may be reflected such that at least a portion of the reflected light is prohibited from reaching the illumination position P.

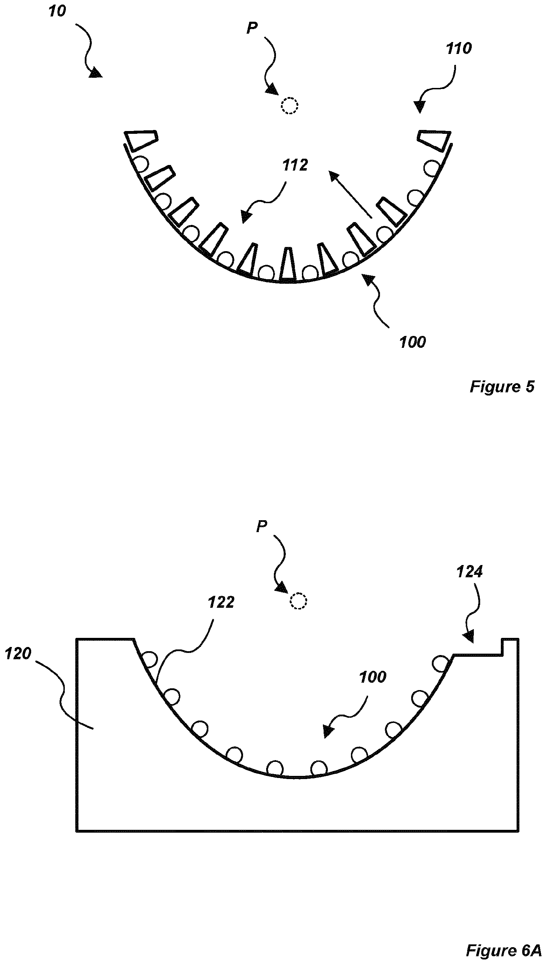

As is illustrated in Fig. 5, a light-emitting element of the plurality of light-emitting elements 100 may, in the mounted state, be at least partly arranged in an associated tubular channel. For instance, in the mounted state, a light-emitting element may be inside a tubular channel. This may allow a majority of, or even all, light emitted by such light-emitting element to enter the tubular channel. This, in turn, may allow for even further reduction of the probability of light reaching the illumination position P from unintended positions/directions.

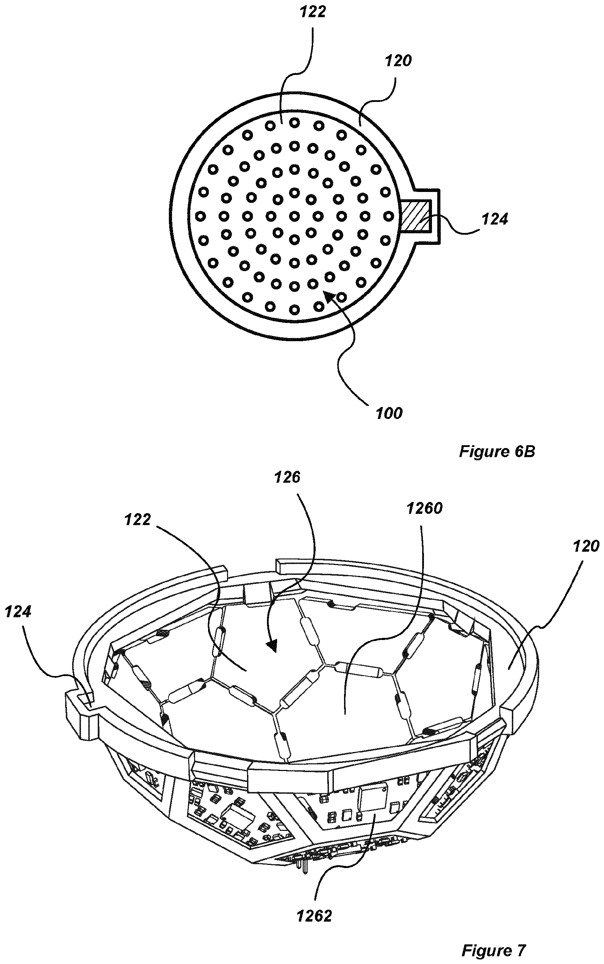

The light source 10 may further comprise a support member 120, which is illustrated in Fig. 6A and Fig. 6B. Figure 6A is a schematic illustration of a cross-sectional side view of the light source 10 comprising the support member 120. Figure 6B is a schematic illustration of a top view of the light source 10 comprising the support member 120. The support member 120 may have a curved interior surface 122. The plurality of light-emitting elements 100 may be arranged on the curved interior surface 122 of the support member 120. The plurality of light-emitting elements 100 may be distributed over the curved interior surface 122 and configured to predominantly emit light along a direction parallel to a normal of the curved interior surface 122. As illustrated in the example of Fig. 6A, the curved interior surface 122 may be concave along at least one direction along the surface 122. For example, the curved interior surface 122 may be a cylindrical surface. The curved interior surface 122 may be concave along two perpendicular directions along the surface. For example, the curved interior surface 122 may have a shape similar to a segment of a sphere. A segment of a sphere may be a spherical cap or a spherical dome. Arranging the plurality of light-emitting elements 100 on a curved interior surface 122 may be advantageous in that a distance R from each light-emitting element to the illumination position P of the light source 10 may be similar. Since this distance is similar, an intensity of light emitted from each light-emitting element may be similar at the illumination position P. This may be understood as an effect of the inverse square law. Thus, the illumination position may be illuminated by light having similar intensities for each direction of the plurality of directions, which may, in turn, allow for a more homogenous illumination of the illumination position P independent of illumination direction. The distance R from each light-emitting element to the illumination position may be in a range from 4 cm to 15 cm. It may be advantageous to configure the light source 10 such that the distance R from each light-emitting element to the illumination position P is large enough such that each light-emitting element may be treated as a point source. Hence, the distance R from each light-emitting element to the illumination position P may be larger than 15 cm, given that an intensity of light from each light-emitting element at the illumination position P is high enough to produce digital images of a sample positioned at said illumination position P. However, it is to be understood that the plurality of light-emitting elements 100 may be arranged on a flat surface or on a surface having an irregular shape. It is further to be understood that Fig. 6A illustrates a cross section of the light source 10. Hence, the curved interior surface 122 of the light source 10 illustrated in Fig. 6A may be a cylindrical surface or a portion of a spherical surface (or of a quasi-spherical surface). The curved interior surface 122 of the support member 120 may be bowl shaped.

The support member 120 and the light-shielding member 110 may be releasably attachable. This functionality may be facilitated by suitable fastening means. Examples of such fastening means comprise low-tack adhesives, screws, clamps, etc. As a further example, which is illustrated in Fig. 6A and Fig. 6B, this may be facilitated by providing the support member 120 with a receiving portion 124. The receiving portion 124 of the support member 120 may be configured to receive the protrusion 114 of the light-shielding member 110 (see Fig. 2 and Fig. 4). The receiving portion 124 may be further configured to clamp the protrusion 114, whereby the support member 120 and the light-shielding member 110 are releasably attached. The protrusion 114 and the receiving portion 124 may be configured such that support member 120 and the light-shielding member 110 are arranged such that each light-emitting element of the plurality of light-emitting elements 100 are associated with one aperture. Put differently, the fastening means may also serve to facilitate a correct relative positioning of the plurality of light-emitting elements 100 and the light-shielding member 110. It is further to be understood that the same functionality may be achieved by providing the support member 120 with the protrusion 114 and the light-shielding member 110 with the receiving portion 124.

As is illustrated in Fig. 7, the curved interior surface of the support member may be formed by a plurality of surface elements 126. Each surface element of the plurality of surface elements 126 may be flat. Put differently, the curved interior surface 122 may be formed of a plurality of flat surfaces. Thus, the curved interior surface 122 may be piecewise flat. A surface element of the plurality of surface elements 126 may be a facet. The curved interior surface 122 may be a portion of a quasi-spherical surface comprising the plurality of surface elements 126. Hence, the curved interior surface 122 may be a portion of a surface of a polyhedron. An example of such polyhedron may be a truncated icosahedron. The plurality of light-emitting elements 100 may be arranged on the plurality of surface elements 126 (not shown in Fig. 7). A light-emitting element may be arranged such that the light-emitting element is configured to emit light in a direction substantially parallel to a normal of the associated surface element. The curved interior surface 122 of the support member 120 of Fig. 7 may have a shape similar to a bowl. It is to be understood that a surface element may be a flat surface having at least three sides. For instance, the curved interior surface 122 may be formed by surface elements having five sides and surface elements having six sides (e.g., similar to an inner surface of a football or soccer ball). The curved interior surface 122 may be a continuous surface. However, it is to be understood that each surface element may be separate. Hence, the curved interior surface 122 may be formed by a plurality of parts, and each surface element may be formed by one or more parts. It is further to be understood that each part may include one or more surface elements. Further, such parts may be arranged in contact with neighboring parts or may be arranged at a distance from neighboring parts. A single part may include all surface elements. It is further to be understood that the number surface elements of the support member illustrated in Fig. 7 is an example only, and other numbers of surface elements may be used to form the curved interior surface 122 of the support member 120. One or more light-emitting elements of the plurality of light-emitting elements 100 may be arranged at a surface element of the plurality of surface elements 126. One or more surface elements of the plurality of surface elements 126 may be printed-circuit boards (PCBs). A PCB may comprise circuits to which one or more light-emitting elements may be connected. Through such connections, the light-emitting elements may be powered and/or controlled. A light-emitting element may be arranged on a first side 1260 of a PCB of the plurality of PCBs. Circuitry (e.g., power and/or control lines) coupled to the light-emitting element may be arranged at a second side 1262 of the PCB of the plurality of PCBs.

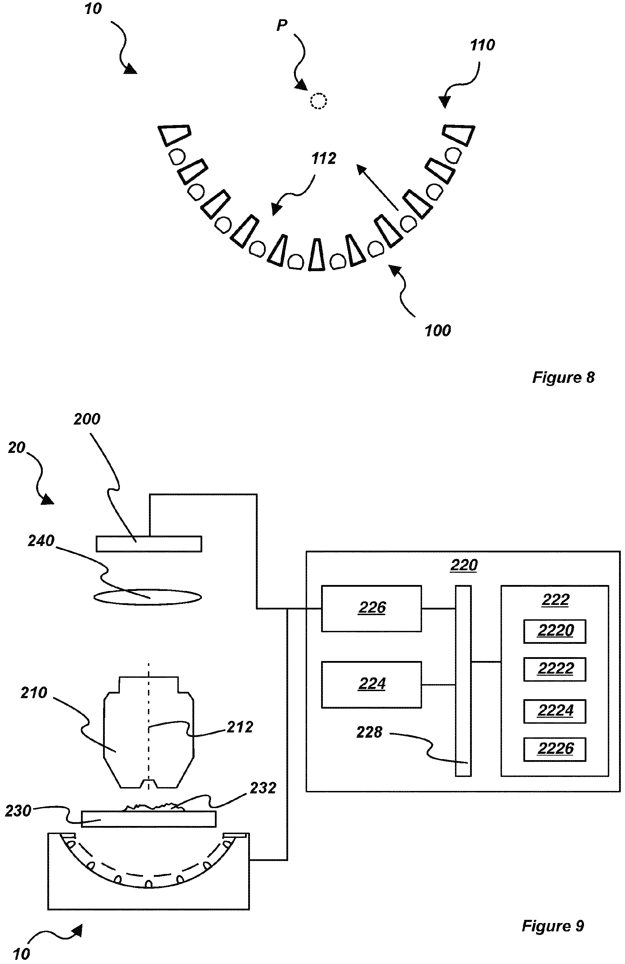

Another example of a mounted state is illustrated in Fig. 8. As in the mounted state illustrated in Fig. 8, the plurality of light-emitting elements 100 may be attached to the light-shielding member 110. For such configuration, a support member 120 may not be needed. Further, such configuration may be more stable in that each light-emitting element may be fixedly attached relative to its associated aperture. For example, each light-emitting element may be fixedly attached to the inner surface of the tubular channel defining the associated aperture. A skilled person is aware of other suitable manners in which each light-emitting element may be fixedly attached relative to its associated aperture.

Even though not illustrated in the figures, the light source 10 may further comprise a plurality of partition wall members. At least one partition wall member of the plurality of partition wall members may be arranged in between two neighboring light-emitting elements of the plurality of light-emitting elements. Hence, the aperture associated with a light-emitting element may be defined by one or more partition wall members surrounding one or more light-emitting elements. Thus, the at least one partition wall member may be arranged to prohibit light from a first light-emitting element of the two neighboring light-emitting elements to reach a second light-emitting element of the two neighboring light-emitting elements. This, in turn, may allow light emitted from the first (or the second) light-emitting element of the two neighboring light-emitting elements to predominantly illuminate the illumination position P via its associated aperture. Put differently, a probability of light reaching the illumination position P from unintended positions/directions may be even further reduced.

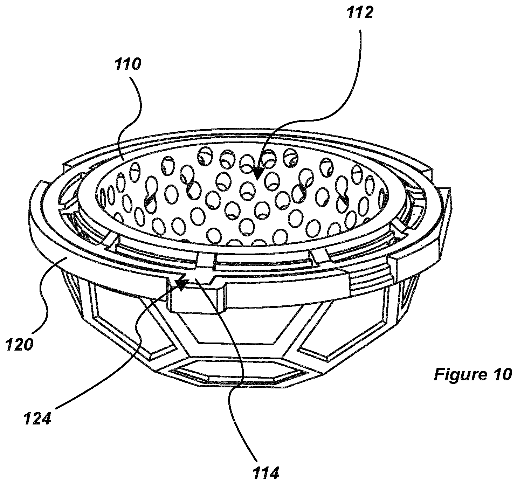

Figure 10 illustrates an example of a mounted state of the light source 10. In the example of Fig. 10, the light-shielding member 110 of Fig. 4 is releasably attached to the support member 120 of Fig. 7. The protrusion 114 of the light-shielding member 110 is received by the receiving portion 124 of the support member, whereby the receiving portion 124 clamps the protrusion 114. Even though it may not be visible in Fig. 10, each light-emitting element of the plurality of light-emitting elements 100 is associated with an aperture of the plurality of apertures 112 in the mounted state of the light source 10. Put differently, in the mounted state of the light source 10, each light-emitting element of the plurality of light-emitting elements 100 is configured to emit light to the illumination position P via an associated aperture of the plurality of apertures 112.

Figure 9 is a schematic illustration of a Fourier ptychography microscope system 20. The Fourier ptychography microscope system 20 comprises an image sensor 200, a microscope objective 210, a light source 10, and circuitry 220. As is illustrated in Fig. 9, the Fourier ptychography microscope system 20 may further comprise a sample holder 230. The microscope system 20 may comprise further components, for example input devices (mouse, keyboard, touchscreen, etc.) and/or a display. The circuitry 220 is configured to execute an acquisition function 2220 and an image processing function 2222. The circuitry 220 may be further configured to execute one or more of a focus function 2224 and a sample position function 2226.

The image sensor 200 may be an image sensor 200 capable of capturing color images. To that end, the image sensor 200 may comprise a color filter. For instance, the image sensor 200 may comprise a Bayer filter. The image sensor 200 may comprise a charge-coupled device (CCD) or a complementary metal-oxide-semiconductor (CMOS). Even though the image sensor 200 is illustrated on its own in Fig. 9, it is to be understood that the image sensor 200 may be comprised in a camera. Additional optics may also be used for imaging. For instance, a relay lens 240 may be present as is illustrated in the example of Fig. 9.

In the example of Fig. 9, the sample holder 230 is a microscope slide onto which a sample 232 has been applied. It is to be understood that the sample 232 may be covered by a coverslip (not illustrated in Fig. 9). The sample holder 230 may be configured to hold the sample 232 to be analyzed. The sample holder 230 may be movable (e.g., by being coupled to manual and/or motorized stages), thereby allowing the sample 232 to be moved such that different portions of the sample 232 may be imaged by the microscope objective 210.

The microscope objective 210 is configured to image the sample 232 onto the image sensor 200. Put differently, the microscope objective 210 and/or the sample 232 may be arrangeable such that an object plane of the microscope objective 210 may coincide with the sample 232 and an image plane of the microscope objective 210 may coincide with the image sensor 200. The microscope objective 210 and/or the sample holder 230 may be coupled to one or more translation motors. The one or more translation motors may comprise manual motors. The one or more translation motors may comprise translation motors controllable by a computing device (e.g., a computer, server, smartphone, etc.). The one or more translation motors may be configured to move the microscope objective 210 and/or the sample holder 230. The relative arrangement of the microscope objective 210 and the sample 232 may be facilitated by the focus function 2224 and/or the sample position function 2226. The focus function 2224 may be configured to control the relative arrangement of the microscope objective 210 and the sample 232 such that the sample 232 is imaged in focus by the image sensor 200. The focus function 2224 may take manual input. Put differently, a focusing of the sample 232 may be manually controllable. The focus function 2224 may be configured to automatically control the relative arrangement of the microscope objective 210 and the sample 232 such that the sample 232 is imaged in focus by the image sensor 200. Put differently, the focus function 2224 may be an autofocus function. The focus function 2224 may be configured to control the translation motors coupled to the microscope objective 210 and/or the sample holder 230. The microscope objective 210 and/or the sample holder 230 may be movable along an optical axis 212 of the microscope objective 210. Put differently, the microscope objective 210 and/or the sample holder 230 may be movable along a focusing direction of the microscope objective 210. The sample position function 2226 may be configured to control a position of the sample holder 230. The sample position function 2226 may take manual input. Put differently, the position of the sample holder 230 may be manually adjustable. The sample position function 2226 may be configured to control the one or more translation motors coupled to the sample holder 230.

The light source 10 may be similar, or even identical, to the light source 10 described above in connection with Fig. 1 - 8 and Fig. 10. At least one direction of the plurality of directions which the plurality of light-emitting elements 100 of the light source 10 is configured to illuminate the sample 232 from may correspond to an angle larger than a numerical aperture of the microscope objective 210. Accordingly, information of the Fourier space (i.e., the Fourier space associated with the sample 232) corresponding to higher spatial frequencies may thereby be collected in the captured digital images.

The acquisition function 2220 is configured to acquire a set of digital images by being configured to control the light source 10 to illuminate the sample 232 with a plurality of illumination patterns. The acquisition function 2220 is further configured to control the image sensor 200 to capture a digital image for each illumination pattern of the plurality of illumination patterns. Here "illumination patterns" should be understood as different ways of illuminating the sample 232 using the light source 10. Each illumination pattern may, e.g., be formed by simultaneously illuminating the sample 232 from one or more directions of the plurality of directions, and/or by varying the number of light-emitting elements of the light source 10 that emit light. An illumination pattern of the plurality of illumination patterns may be formed by one or more light-emitting elements of the plurality of light-emitting elements 100. In other words, an illumination pattern of the plurality of illumination patterns may be formed by illuminating the sample 232 with one light-emitting element of the plurality of light-emitting elements 100. Alternatively, or in combination, an illumination pattern of the plurality of illumination patterns may be formed by illuminating the sample 232 simultaneously by a subset of the plurality of light-emitting elements 100. Accordingly, the digital images of the sample 232 may captured under different illumination conditions, whereby more information (e.g., information associated with a larger portion of the Fourier space) of the sample 232 may be collected in the captured digital images. For instance, each light-emitting element (or other type of light source) of the plurality of light-emitting elements 100 may be arranged to illuminate the sample 232 from one direction of a plurality of directions. At least one illumination pattern of the plurality of illumination patterns may be formed by a light-emitting element configured to illuminate the sample 232 from a direction corresponding to an angle larger than the numerical aperture of the microscope objective 210. The light source 10 may be configured to simultaneously illuminate the sample 232 with one or more light-emitting element of the plurality of light-emitting elements 100. Put differently, the light source 10 may be configured to simultaneously illuminate the sample 232 from one or more directions of the plurality of directions. At least one direction of the plurality of directions may correspond to an angle larger than a numerical aperture of the microscope objective 210.

The image processing function 2222 is configured to process the set of digital images, and output a processing result associated with the sample 232. The image processing function 2222 may be configured to process the set of digital images by being configured to input the set of digital images into a machine learning model trained to process digital images of samples, and receive, from the machine learning model, the processing result associated with the sample 232. The machine learning model may be a machine learning model suitable for image processing. For instance, the machine learning model may be a convolutional neural network. The processing result may comprise one or more of a digital image depicting the sample; a classification of the sample; and a detection of one or more objects within the sample.

As is illustrated in the example of Fig. 9, the circuitry 220 may comprise one or more of a memory 222, a processing unit 224, a transceiver 226, and a data bus 228. The circuitry 200 may form part of a computing device (e.g., a computer, a server, a smartphone, etc.) configured to control one or more functions of the microscope system 20. The memory 222, the processing unit 224, and the transceiver 226 may be configured to communicate via the data bus 228. Accompanying control lines and address busses between the memory 222, the processing unit 224 and the transceiver 226 may also be present. The processing unit 224 may for example comprise one or more of a central processing unit (CPU), a graphical processing unit (GPU), a microcontroller, and a microprocessor. The processing unit 224 may be configured to execute program code stored in the memory 222, in order to carry out functions and operations of the microscope system 20. The transceiver 226 may be configured to communicate with external devices. The transceiver 226 may both transmit data from and receive data to the computing device. For example, the transceiver 226 may be configured to communicate with servers, computer external peripherals (e.g., external storage), etc. The external devices may be local devices or remote devices (e.g., a cloud server). The transceiver 226 may be configured to communicate with the external devices via an external network (e.g., a local-area network, the internet, etc.). The transceiver 226 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire. The memory 222 may be a non-transitory computer-readable storage medium. The memory 222 may be a random-access memory. The memory 222 may be a non-volatile memory. The memory 222 may comprise one or more of a buffer, a flash memory, a hard drive, a removable media, a volatile memory, a non-volatile memory, a random access memory (RAM), or another suitable type. In a typical arrangement, the memory 222 may include a non-volatile memory for long term data storage and a volatile memory that functions as system memory for the device. The memory 222 may exchange data within the circuitry 200 over the data bus 228. As is illustrated in the example of Fig. 9, the memory 200 may store program code portions 2220, 2222, 2224, 2226 corresponding to one or more functions. The program code portions 2220, 2222, 2224, 2226 may be executable by the processing unit 224, which thereby performs the functions. Hence, when it is referred to that the circuitry 200 is configured to execute a specific function, the processing unit 224 may execute program code portions 2220, 2222, 2224, 2226 corresponding to the specific function which may be stored on the memory 222. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Fourier ptychography microscopy may involve illuminating a sample with a plurality of illumination patterns (e.g., from different directions) and capturing a digital image for each illumination pattern of the plurality of illumination patterns. Using this technique, information regarding finer details of the sample may be captured than what normally is resolvable by conventional microscopy (i.e., using a conventional microscope illumination such as a bright-field illumination). This can be understood as different portions of Fourier space (i.e., the spatial frequency domain) associated with the sample being imaged for different illumination patterns. Further, by illuminating the sample with a plurality of illumination patterns and capturing a digital image for each of the plurality of illumination patterns, information regarding a refractive index (or a spatial distribution of a refractive index) associated with the sample may be captured. This can be understood as an effect of refraction of light being dependent on an angle of incidence for light illuminating the sample and the refractive index of the sample. Information regarding the refractive index of the sample may, in turn, allow phase information (typically referred to as quantitative phase within the art) associated with the sample to be determined. Since the plurality of digital images comprises information associated with one or more of fine details of the sample, a refractive index associated with the sample, and phase information associated with the sample, this information may be used in the training of the machine learning model. This may, in turn, allow for a trained machine learning model to extract more information of the sample than what would be allowed in case the plurality of digital images were captured from only one direction or by using conventional microscopy. Using conventional microscopy (e.g., by illuminating the sample from a majority of the plurality of illumination patterns up to a numerical aperture of the microscope objective used to image the sample), it may be difficult, or even impossible, to capture information associated with the refractive index associated with the sample and/or phase information associated with the sample. Put differently, since an image captured using conventional microscopy may contain information regarding the refraction of light impinging from all directions (or at least a majority) of the plurality of directions, it may be impossible using such techniques to determine how the light from a specific direction is refracted by the sample. Thus, it may not be possible to determine information associated with the refractive index of the sample using conventional microscopy. Illuminating the sample with a plurality of illumination patterns may further allow for capturing information relating to details of the sample which are finer than what normally is allowed by a microscope objective used to capture the digital images of the sample. Thus, a microscope objective having a relatively lower magnification may be used while still being able to capture information related to fine details of the sample. Using a relatively lower magnification microscope objective may, in turn, allow for digital images of larger portions of the sample to be captured at each imaging position. Hence, the entire sample may be scanned by capturing digital images at relatively fewer positions which, in turn, may allow for a faster scanning of the sample.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinIR. The machine learning model may be a model for producing super-resolution images, and an example of such model may be an Enhanced Super-Resolution Generative Adversarial Network (ESRGAN). The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). Different types of loss functions may be used to evaluate the predicted output, i.e. how well is compares to the ground truth. The machine learning model may be trained to reduce (or increase, depending on the loss function) a value of the loss function. Put differently, training the machine learning model may be seen as minimizing (or maximizing) the loss function. The loss function may be a pixel-wise loss function, i.e. a loss function which compares the output and ground truth pixel by pixel. Alternatively, the loss function may be a non-pixel-wise loss function, i.e. a loss function which looks at the images as a whole.

The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is to be understood that the machine learning model may take further input during training. An example of such input may be what type of sample is to be imaged. Such input may then be used when constructing a digital image depicting the sample using the trained machine learning model. Depending on the desired image processing output from the (trained) image processing machine learning model, the ground truth may vary. For instance, in case a digital image depicting a sample is part of the desired output, the ground truth may comprise a digital image of a training sample. In particular, in case the desired output is a digital image having a relatively higher resolution (or magnification) than a digital image of the input set of digital images, the ground truth may comprise a digital image depicting the training sample and having a resolution (or magnification of the training sample) relatively higher than a digital image of the training set of digital images. Further, in case the desired output is a classification of a sample and/or detected objects within a sample, the ground truth may comprise a classification of the training sample and/or information associated with objects within the training sample.

The person skilled in the art realizes that the present inventive concept by no means is limited to the preferred variants described above. On the contrary, many modifications and variations are possible within the scope of the appended claims. For example, the light-emitting elements are illustrated as being arranged on a curved surface in the figures. However, it is to be understood that the light-emitting elements may be arranged on surfaces having other shapes as well. For instance, the light-emitting elements may be arranged on a flat surface or an irregularly shaped surface. Further, the light-emitting elements are illustrated in the figures as being oriented to illuminate the illumination position (or the sample). However, it is to be understood that the light source may comprise additional optical components for that purpose. For instance, the light source may comprise a plurality of optical fibers arranged such that light emitted by the light-emitting elements illuminate the illumination point (or the sample) from a plurality of directions. Additionally, variations to the disclosed variants can be understood and effected by the skilled person in practicing the claimed invention, from a study of the drawings, the disclosure, and the appended claims.

## Claims

1. A light source (10) for a Fourier ptychography microscopy system (20), the light source (10) being configured to illuminate a sample (232) from a plurality of directions, the light source comprising:
a plurality of light-emitting elements (100), each light-emitting element being configured to illuminate the sample (232) from one direction of the plurality of directions; and
a light-shielding member (110) provided with a plurality of apertures (112); and
wherein the light-shielding member (110) and the plurality of light-emitting elements (100) are arrangeable in a mounted state in which each light-emitting element of the plurality of light-emitting elements (100) is associated with one aperture of the plurality of apertures (112) for enabling said light-emitting element to illuminate the sample (232) through said one aperture.

2. The light source (10) according to claim 1, wherein an aperture of the plurality of apertures (112) of the light-shielding member (110) in the mounted state is arranged in close proximity to a light-emitting element of the plurality of light-emitting elements (100).

3. The light source (10) according to claim 1 or 2, wherein an aperture of the plurality of apertures (112) of the light-shielding member (110) is defined by a tubular channel.

4. The light source (10) according to claim 3, wherein a length (L) of the tubular channel is at least 2 mm, preferably at least 5 mm.

5. The light source (10) according to claim 3 or 4, wherein a light-emitting element of the plurality of light-emitting elements (100) is at least partly arranged in an associated tubular channel.

6. The light source (10) according to claim 1 or 2, further comprising:
a plurality of partition wall members;
wherein at least one partition wall member is arranged in between two neighboring light-emitting elements.

7. The light source (10) according to any one of claims 1-6, wherein the light-shielding member (110) is formed as a single-piece structure.

8. The light source (10) according to claim 7, wherein the single-piece structure is 3D printed.

9. The light source (10) according to any one of claims 1-8, further comprising:
a support member (120) having a curved interior surface (122); and
wherein the plurality of light-emitting elements (100) is arranged on the curved interior surface (122) of the support member (120).

10. The light source (10) according to claim 9, wherein the curved interior surface (122) of the support member (120) is formed by a plurality of surface elements (126).

11. The light source (10) according to claim 8 or 10, wherein the support member (120) and the light-shielding member (110) are releasably attachable.

12. The light source (10) according to any one of claims 1-8, wherein, in the mounted state, the plurality of light-emitting elements (100) is attached to the light-shielding member (110).

13. The light source (10) according to any one of claims 1-12, wherein a light-emitting element of the plurality of light-emitting elements (100) is a light-emitting diode configured to emit polychromatic light.

14. A Fourier ptychography microscope system (20) comprising:
an image sensor (200);
a microscope objective (210) configured to image a sample (232) onto the image sensor (200);
the light source (10) according to any one of claims 1-13; and
circuitry (220) configured to execute:
an acquisition function (2220) configured to acquire a set of digital images by being configured to:
control the light source (10) to illuminate the sample (232) with a plurality of illumination patterns, and
control the image sensor (200) to capture a digital image for each illumination pattern of the plurality of illumination patterns, and
an image processing function (2222) configured to:
process the set of digital images, and
output a processing result associated with the sample (232).

15. The Fourier ptychography microscope system (20) according to claim 14, wherein an illumination pattern of the plurality of illumination patterns is formed by one or more light-emitting elements.

16. The Fourier ptychography microscope system (20) according to claim 14 or 15, wherein at least one direction of the plurality of directions corresponds to an angle larger than a numerical aperture of the microscope objective (210).

17. The Fourier ptychography microscope system (20) according to any one of claims 14-16, wherein the image processing function (2222) is configured to process the set of digital images by being configured to:
input the set of digital images into a machine learning model trained to process digital images of samples; and
receive, from the machine learning model, the processing result associated with the sample (232).

18. The Fourier ptychography microscope system (20) according to any one of claims 14-17, wherein the processing result comprises one or more of:
a digital image depicting the sample (232);
a classification of the sample (232); and
a detection of one or more objects within the sample (232).
